# EUROPÄISCHE PATENTSCHRIFT

(11) **EP 2 117 842 B1**
(45) Veröffentlichungstag und Bekanntmachung des Hinweises auf die Patenterteilung: **11.03.2015**
(21) Anmeldenummer: 08701054.2
(22) Anmeldetag: 10.01.2008
(51) Int. Cl.: B32B 38/00, B32B 37/20, E04F 15/02

(54) **VERFAHREN ZUR HERSTELLUNG EINES FUSSBODENPANEELS MIT EINEM KERN UND EINER DÄMMSCHICHT**
METHOD FOR PRODUCING A FLOOR PANEL HAVING A CORE AND AN INSULATING LAYER
PROCÉDÉ DE FABRICATION D'UN PANNEAU DE REVÊTEMENT DE SOL COMPRENANT UNE ÂME ET UNE COUCHE D'INSONORISATION

(30) Priorität: 11.01.2007 DE 102007002484
(43) Veröffentlichungstag der Anmeldung: 18.11.2009
(73) Patentinhaber: LaminatePark GmbH & Co. KG, 66265 Heusweiler (DE)
(72) Erfinder: EISERMANN, Ralf, 56812 Cochem (DE)
(74) Vertreter: Lohmanns, Bernard
(86) Internationale Anmeldenummer: PCT/EP2008/000127
(87) Internationale Veröffentlichungsnummer: WO 2008/083964

(56) Entgegenhaltungen:
- US-A1- 2003 021 979
- US-A1- 2003 108 718
- US-A1- 2003 143 383
- US-A1- 2004 023 006
- US-B1- 6 558 786

## Beschreibung

Die Erfindung betrifft ein Verfahren zur Herstellung eines Fußbodenpaneels, das einen Kern und eine Dämmschicht aufweist, die an einer Trittseite des Fußbodenpaneels angeordnet ist.

Ein derartiges Fußbodenpaneel ist aus der EP 1 264 946 A1 bekannt. Die Dämmschicht ist dabei als Schalldämmschicht ausgebildet und ist an einer der Trittseite des Fußbodenpaneels zugewandten Seite des Kerns befestigt. Die Schalldämmschicht ist zwischen dem Kern und einer Oberflächenschicht angeordnet, die aus einer oder mehreren dünnen Papierfaserlagen besteht und mit einem gewünschten Dekor (beispielsweise Holzmaserung) versehen sowie mit wärmehärtenden Aminoplastharzen wie Melaninharz imprägniert wurde. Das Dekor mit Holzmaserung verleiht dabei dem Fußbodenpaneel ein hochwertiges und natürliches Aussehen, das dem eines Echtholz-Fußbodens nachempfunden ist.

Aus der EP 1 264 946 A1 ist weiterhin bekannt, dass die Schalldämmschicht aus Kunststoff ist. Üblicherweise werden dabei Kunststoffschichten bzw. -folien als Endlosbahn beispielsweise durch ein Extrusionsverfahren hergestellt.

Das aus der EP 1 264 946 A1 bekannte Fußbodenpaneel weist mehrere Schichten auf, die durch Wärme und Druck miteinander verpresst werden. Aufgrund der Vielzahl der Schichten ist die Herstellung des Fußbodenpaneels aufwendig. Der Erfindung liegt daher die Aufgabe zugrunde, ein Verfahren zur Herstellung eines Fußbodenpaneels bereitzustellen, das einfach und kostengünstig ist und zu Fußbodenpaneelen führt, die insbesondere im verlegten Zustand ein hochwertiges Aussehen aufweisen.

US-A-2003/0108718 offenbart ein Verfahren zur Herstellung eines Fußbodenpaneels mit einer Länge und mit einer Breite, dass einen Kern und eine Dämmschicht aufweist, die an einer Trittseite des Fullbodenpaneels angeordnet ist, wobei die Dammschicht einer Druckmaschine zugeführt wird, die auf einer zur Trittseite zugewandten Oberseite der Dämmschicht ein wiederkehrendes Druckbild mit einer Druckbildlänge erzeugt, die der Länge des Fullbodenpaneels oder einem Vielfachen von entspricht.

Die US-A-2004/0023006 offenbart ein Verfahren zur kontinuierlichen Herstellung von Paneelen unter Verwendung einer Endlosbahn.

Die der Erfindung zugrunde liegende Aufgabe wird mit der Merkmalskombination gemäß Anspruch 1 gelöst. Bevorzugte Ausführungsbeispiele können den Unteransprüchen entnommen werden.

Bei dem Verfahren gemäß Anspruch 1 wird eine Endlosbahn einer Druckmaschine zugeführt, die auf einer Oberseite der Endlosbahn ein wiederkehrendes Druckbild mit einer Druckbildlänge erzeugt, die einer Länge L des Fußbodenpaneels oder einem Vielfachen von L entspricht.

Durch das erfindungsgemäße Verfahren wird die Druckbildlänge der Länge L des Fußbodenpaneels genau angepasst. Auf dem Markt von Fußboden-Laminatpaneelen hat sich ein Standard ausgebildet, wonach ein Laminatpaneel eine Länge von ca. 1300 mm und eine Breite von ca. 20 mm oder diesem Raster entsprechende Vergrößerungen oder Verkleinerungen (z.B. 100 x 650 mm, 400 x 1.300 mm, 400 x 650 mm usw.) aufweist. Entsprechend würde bei einem Fußbodenpaneel mit einer Länge von 1300 mm die Druckbildlänge ebenfalls 1300 m betragen. Bei einem Fußbodenpaneel mit einer Länge von 650 mm könnte gemäß Anspruch 1 die Druckbildlänge ebenfalls 1300 m betragen, da in diesem Fall die Druckbildlänge dem Zweifachen der Länge L des Fußbodenpaneels entsprechen würde.

Erfindungsgemaß entspricht eine Breite der Endlosbahn einem Vielfachen der Breite B des Fußbodenpaneels. Wenn beispielsweise von einem Fußbodenpaneel der Breite B von 200 mm ausgegangen wird, so könnte die Breite der Endlosbahn 2 m oder - wenn Materialverluste beim Trennen berücksichtigt werden - etwas mehr als 2 m betragen, so dass sich durch entsprechende Längsschnitte aus der Endlosbahn Dämmschichten für 10 Fußbodenpaneele erzeugen lassen. Zweckmäßigerweise ist auf die Breite der Endlosbahn eine Druckbildbreite des Druckbilds abgestimmt, so dass die Endlosbahn beim Durchlauf durch die Druckmaschine vollständig bedruckt wird.

Oft weisen Fußbodenpaneele ein Holzdekor in Form eines Drei-Stab-Dekors auf, bei dem auf einem Fußbodenpaneel drei Stabreihen aufgedruckt sind. Jede Stabreihe weist mehrere Stäbe mit einer Länge von ca. 300 mm auf, wobei die Stäbe - entsprechend einem Echtholz-Fußboden mit Holzstäben- jeweils im wesentlichen gleich lang sind, und wobei die Stäbe in einer Reihe zu den Stäben einer Nachbarreihe versetzt angeordnet sind. Dadurch ergeben sich an den Enden des Fußbodenpaneels zwangsläufig Stäbe kleinerer Länge. Der Versatz der Stäbe untereinander ist in einem bevorzugten Ausführungsbeispiel jedoch so gestaltet, dass die Stäbe am Ende des Paneels nicht zu kurz sind, beispielsweise nicht kürzer als 50 mm, vorzugsweise nicht kürzer als 100 mm. Ansonsten könnten die zu kurzen Stäbe beim Betrachter den Eindruck erwecken, hier wären minderwertige Stabreste verarbeitet worden. Ein solcher Eindruck könnte sich noch verstärken, wenn zwei in einer Reihe verlegte Fußbodenpaneele an ihrer gemeinsamen Stoßkante jeweils derartige Stabreste aufweisen, so dass es dann an der gemeinsamen Stoßkante zur einer Ansammlung von Stabresten kommt. Wäre die Druckbildlänge nicht auf die Länge L des Fußbodenpaneels oder auf einem Vielfachen von L abgestimmt, so käme es aufgrund des dann vorliegenden Versatzes, der sich in einer kontinuierlichen Endlosproduktion sukzessive addieren würde, unweigerlich zu den unerwünschten kurzen Stabresten am Ende des Fußbodenpaneels.

Die Dämmschicht kann aus einem federnden weichen Material wie Kunststoff sein. Beispielsweise kann die Dämmschicht Polyethylen (PE), Polypropylen (PP) und/oder Polyurethan (PUR) umfassen. In einem bevorzugten Ausführungsbeispiel umfasst die Dämmschicht Polyvinylchlorid (PVC), das zweckmäßigerweise aufgeschäumt ist. Damit das aufgeschäumte PVC an der Oberseite bedruckt werden kann, kann die Oberseite durch eine nicht geschäumte Oberschicht gebildet werden, die zudem durch geeignete Zusätze abriebfest ist. Eine andere Möglichkeit besteht darin, beim Aufschäumen dafür Sorge zu tragen, dass die Endlosbahn an der Oberseite eine glatte Oberfläche aufweist, indem beispielsweise durch eine große Kühlleistung an der Oberseite direkt nach einer Extrusion der Endlosbahn vorgehalten wird. Durch die starke Kühlung bilden sich trotz des vorzugsweise einzusetzenden Treibmittels im geschäumten PVC keine oder nur sehr wenige Poren aus, so dass durch diese Maßnahme eine glatte Oberfläche erzeugt werden kann. Auch mit den oben genannten anderen Kunststoffen lassen sich entsprechend geschäumte Schichten und/oder glatte Oberschichten herstellen.

Um eine gute Verbindung zwischen der Dämmschicht und dem Kern, der vorzugsweise aus einer Mitteldichtefaser-Platte (MDF-Platte) oder Hochdichtefaser-Platte (HDF-Platte) aus Holz hergestellt ist, zu erzeugen, kann ein Haftvermittler an einer Unterseite der Endlosbahn vorgesehen sein. Der Haftvermittler kann dabei eine Folie sein, die nach Extrusion der Dämmschicht auf diese aufkaschiert wird. Eine andere Möglichkeit ist, den Haftvermittler direkt bei der Extrusion an der Unterseite der Endlosbahn einzubringen (beispielsweise im Koextrusionsverfahren).

In einem bevorzugten Ausführungsbeispiel beträgt die Dicke der Dämmschicht 0,5 bis 4 mm. In einer bevorzugten Ausführungsform beträgt die Dicke der Dämmschicht 1,5 bis 2 mm. Je nach Anforderung kann die Dämmschicht auch dünner oder dicker ausgebildet werden.

Das wiederkehrende Druckbild kann durch einen Druckzylinder mit einer Längenabwicklung erzeugt werden, die der Länge L des Fußbodenpaneels oder einem Vielfachen von L entspricht. Bei einer Längenabwicklung von 1300 mm würde sich ein Durchmesser des Druckzylinders von ca. 414 mm ergeben.

In einem bevorzugten Ausführungsbeispiel weist die Endlosbahn in einem Abstand von L oder in einem Vielfachen von L Cut- oder Ablängmarkierungen auf. In einem automatisierten Prozess können diese Cut- oder Ablängmarkierungen durch geeignete Leseeinheiten ermittelt werden, so dass die Endlosbahn in einem kontinuierlichen Prozess exakt abgelängt werden kann.

Vorzugsweise wird der Kern aus einer Endlosplatte gewonnen, die in einzelne Trägerplatten mit der Länge L oder mit einem Vielfachen von L zerlegt werden. Erfindungsgemäß wird die Endlosbahn in einzelne Dammschichtbögen mit einer Länge L oder mit einem Vielfachen von L zerlegt. Danach wird ein Dämmschichtbogen auf eine Trägerplatte gelegt. Dämmschichtbogen und Trägerplatte werden dann einem Prozess zugeführt, in dem der Dämmschichtbogen an der Trägerplatte befestigt wird. Dieser Prozess kann eine Presse beinhalten, in der durch Druck und erhöhte Temperatur Dämmschichtbogen und Trägerplatte miteinander verpresst werden. Das Ergebnis dieses Verarbeitungsschrittes ist eine Laminatplatte, die dann in einzelne Fußbodenpaneele geschnitten wird.

Eine weitere bevorzugte Ausführung sieht vor, den Dämmschichtbogen in einzelne Dämmschichtstreifen und die Endlosplatte in einzelne Trägerstreifen zu schneiden, wobei dann ein Dämmschichtstreifen auf einem Trägerstreifen befestigt wird, um so ein Fußbodenpaneel herzustellen. Dämmschichtstreifen und Trägerstreifen würden dann bereits die Breite B des herzustellenden Fußbodenpaneels aufweisen. Bei diesem Verfahren werden das Material der Dämmschicht und das Material der Endlosplatte immer voneinander unabhängig getrennt, so dass die entsprechenden Trennwerkzeuge (beispielsweise ein Sägeblatt) genau auf das zu trennende Material abgestimmt werden können.

An den Kanten des Fußbodenpaneels können Halteprofile eingearbeitet werden, die eine Verbindung zwischen zwei benachbarten Fußbodenpaneelen beim Verlegen ermöglichen. Beispielsweise können die Halteprofile derart ausgebildet sein, dass sie im verlegten Zustand quer zu einer gemeinsamen Stoßkante und parallel zu einer Verlegeebene formschlüssig verbunden sind, so dass eine leimfreie Verlegung möglich ist. Die formschlüssige Verbindung kann als Presspassung, Spielpassung oder Übergangspassung ausgebildet sein.

Anhand der Zeichnung soll die Erfindung näher erläutert werden. Es zeigen:
- Figur 1: ein Fußbodenpaneel;
- Figur 2: einen Querschnitt des Fußbodenpaneels der Figur 1; und
- Figur 3: einen Dämmschichtbogen von oben.

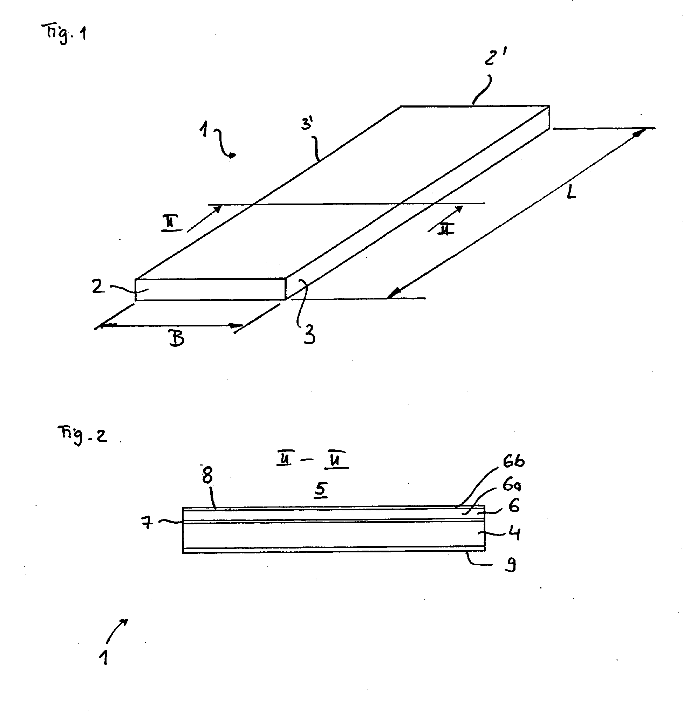

Figur 1 zeigt in perspektivischer Ansicht ein rechteckiges Fußbodenpaneel 1 mit einer Länge L und mit einer Breite B. Die Länge L beträgt rund 1300 mm, während die Breite B ca. 200 mm beträgt. Das Fußbodenpaneel 1 weist Kanten 2, 2', 3. 3' auf, die mit Halteprofilen versehen sind (nicht dargestellt), um beim Verlegen nebeneinander liegende Fußbodenpaneele 1 miteinander zu verbinden. Diese Halteprofile können beispielsweise Nut und Feder umfassen.

Figur 2 zeigt einen Querschnitt durch das Fußbodenpaneel entlang der Linie II-II der Figur 1. Das Fußbodenpaneel weist einen Holzkern 4 auf, der beispielsweise aus einer Mitteldichtefaser-Platte (MDF-Platte) oder einer Hochdichtefaser-Platte (HDF-Platte) hergestellt sein kann. Eine übliche Stärke des Holzkerns 4 beträgt 6 bis 8 mm.

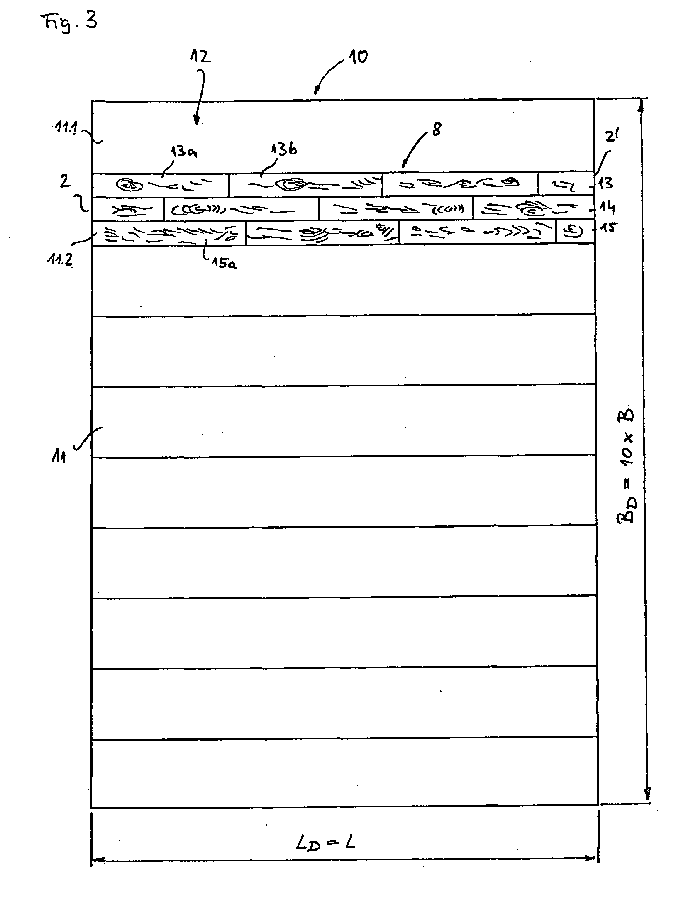

An einer Trittseite 5 des Fußbodenpaneels 1 ist eine Dämmschicht 6 angeordnet, die über eine Haftvermittlerschicht 7 mit dem Holzkern 4 verbunden ist. Die Dämmschicht 6 ist vorzugsweise aus PVC und umfasst eine Schaumschicht 6a und eine Oberseite 6b mit einer im Wesentlichen glatten Oberfläche. Auf der Oberseite 6b ist ein Teil-Druckbild 8 eines (Gesamt-)Druckbilds aufgedruckt, auf das näher in Figur 3 eingegangen wird. Unterseitig an dem Holzkern 4 ist eine Unterschicht 9 vorgesehen.

Figur 3 zeigt einen Dämmschichtbogen 10 von oben. Der Dämmschichtbogen 10 weist eine Länge L_{D} und eine Breite B_{D} auf. Der Dämmschichtbogen 10 soll aus einer Endlosbahn hergestellt worden sein. Die Länge L_{D} beträgt dabei 1300 mm, so dass die Länge L_{D} des Dämmschichtbogens 10 der Länge L des Fußbodenpaneels 1 der Figuren1 und 2 entspricht. Die Breite B_{D} beträgt ca. 200 cm und ist somit zehnmal größer als die Breite des Fußbodenpaneels 1 der Figuren 1 und 2. Somit können aus dem Dämmschichtbogen 10 für zehn Fußbodenpaneele zehn Dämmschichtstreifen 11 geschnitten werden, wobei einzelne Streifen mit 11.1, 11.2 usw. bezeichnet werden. Verluste des Dämmschichtmaterials durch das Trennen der Dämmschichtstreifen 11 sollen hier unberücksichtigt bleiben. Unter Berücksichtigung dieser Trennverluste müsste die Breite B_{D} entsprechend größer gewählt werden.

Auf dem Dämmschichtbogen 10 ist ein Druckbild 12 aufgebracht, das aus zehn einzelnen Teil-Druckbildern 8 besteht. Nur für einen Dämmschichtstreifen 11.2 ist das Teil-Druckbild 8 näher dargestellt. Für die übrigen Dämmschichtstreifen 11 wurde auf eine Darstellung des Teil-Druckbildes 8 verzichtet. Jedoch sei angemerkt, dass sich die anderen Teil-Druckbilder jeweils voneinander unterscheiden, so dass sich aus dem Dämmschichtbogen 10 zehn individuelle Fußbodenpaneele herstellen lassen.

Wie in Figur 3 skizzenhaft angedeutet, ist durch das Teil-Druckbild 8 beim Dämmschichtstreifen 11.2 ein Drei-Stab-Holzdekor gegeben. Das Holzdekor besteht aus drei Stabreihen 13, 14, 15, die wiederum jeweils aus mehreren Stäben 13a, 13b, ..., 15a usw. bestehen.

Das Teil-Druckbild 8 ist dabei so abgestimmt, dass an den Stirnenden der Stabreihen 13, 14, 15 bzw. an den Kanten 2, 2' des Fußbodenpaneels 1 sich keine zu kurzen Stablängen ergeben. Dadurch weist das Fußbodenpaneel 1 ein Aussehen auf wie ein Echtholz-Fußboden, bei dem fast nur hochwertige (lange) Holzstäbe verwendet wurden. Minderwertige Reststäbe mit kurzen Stablängen bleiben die Ausnahme.

Würde beim Verlegen ein Fußbodenpaneel 1 mit an den Kanten 2, 2' angeordneten kurzen Stäben an ein Nachbarpaneel gelegt werden, was an der dann anliegenden Kante ebenfalls kurze Stäbe aufweist, so würde dies zu einem Eindruck minderwertiger Qualität führen. Aufgrund der genauen Abstimmung der Druckbildlänge auf die Länge des Fußbodenpaneels kann sichergestellt werden, dass bei einer Herstellung des Fußbodenpaneels aus einer Endlosplatte und einer Dämmschicht-Endlosbahn es nicht zu einer Verschiebung von Druckbild und Fußbodenpaneel kommt, was unweigerlich zu kurzen Stablängen an den Kanten 2, 2' führen würde.

### Bezugszeichenliste

- 1: Fußbodenlaminat
- 2: Kante
- 3: Kante
- 4: Holzkern
- 5: Trittseite
- 6: Dämmschicht
- 6a: Schaumschicht
- 6b: Oberseite
- 7: Haftvermittler
- 8: Teil-Druckbild
- 9: Unterschicht
- 10: Dämmschichtbogen
- 11: Dämmschichtstreifen
- 12: Druckbild
- 13: Stabreihe
- 14: Stabreihe
- 15: Stabreihe

## Patentansprüche

1. Verfahren zur Herstellung eines Fußbodenpaneels (1) mit einer Länge (L) und mit einer Breite (B), das einen Kern (4) und eine Dämmschicht (6) aufweist, die an einer Trittseite (5) des Fußbodenpaneels (1) angeordnet ist, wobei die Dämmschicht (6) einer Druckmaschine zugeführt wird, die auf einer zur Trittseite zugewandten Oberseite (6b) der
Dämmschicht (6) ein wiederkehrendes Druckbild (12) mit einer Druckbildlänge erzeugt, die der Länge L des Fußbodenpaneels oder einem Vielfachen von L entspricht, **dadurch gekennzeichnet, dass** die Dämmschicht (6) als Endlosbahn mit einer Breite B_{D}, die einem Vielfachen der Breite B des Fußbodenpaneels (1) entspricht, hergestellt wird, dass die Endlosbahn zuerst in einzelne Dämmschichtbögen (12) mit einer Länge L oder mit einem Vielfachen von L abgelängt wird und dass der Dämmschichtbogen (12) auf der Trägerplatte befestigt wird, um eine Laminatplatte zu erzeugen, die nach der Befestigung in einzelne Fußbodenpaneele (1) geschnitten wird.

2. Verfahren nach Anspruch 1 , **dadurch gekennzeichnet, dass** die Dämmschicht (6) einen geschäumten Kunststoff, vorzugsweise einen PVC-Schaum (6a) umfasst.

3. Verfahren nach Anspruch 1 oder 2, **dadurch gekennzeichnet, dass** das wiederkehrende Druckbild (12) durch einen Druckzylinder mit einer Längenabwicklung erzeugt wird, die der Länge L des Fußbodenpaneels (1) einem Vielfachen von L entspricht.

4. Verfahren nach einem der vorhergehenden Ansprüche, **dadurch gekennzeichnet, dass** die Endlosbahn in einem Abstand von L oder einem Vielfachen von L Cut- oder Ablängmarkierungen aufweist.

5. Verfahren nach einem der vorhergehenden Ansprüche, **dadurch gekennzeichnet, dass** der Kern (4) aus einer Endlosplatte gewonnen wird, die in einzelne Trägerplatten mit der Länge L oder mit einem Vielfachen von (L) abgelängt wird.

6. Verfahren nach einem der vorhergehenden Ansprüche, **dadurch gekennzeichnet, dass** an Kanten (2, 3) des Fußbodenpaneels (1) Halteprofile eingearbeitet werden.

## Claims

1. A method for producing a floor panel (1) with a length (L) and a width (B) comprising a core (4) and an insulating layer (6) disposed on a tread side (5) of the floor panel (1), the insulating layer (6) being fed to a printing machine that generates, on a top side (6b) of the insulating layer (6) facing towards the tread side, a recurring printed image (12) with a printed image length corresponding to the length L of the floor panel or a multiple of L, **characterised in that** the insulating layer (6) is produced as a continuous web with a width B_{D} corresponding to a multiple of the width B of the floor panel (1), that the continuous web is first cut into individual insulating layer sheets (12) with a length L or a multiple of L, and that the insulating layer sheet (12) is fixed to the carrier board in order to produce a laminate board which is cut into individual floor panels (1) after the fixation.

2. The method according to claim 1, **characterised in that** the insulating layer (6) comprises a foamed plastic, preferably a PVC foam (6a).

3. The method according to claim 1 or 2, **characterised in that** the recurring printed image (12) is produced by a printing cylinder with an unwinding length corresponding to the length L of the floor panel (1) a multiple of L.

4. The method according to any one of the preceding claims, **characterised in that** the continuous web has cut or cutting markings spaced by L or a multiple of L.

5. The method according to any one of the preceding claims, **characterised in that** the core (4) is obtained from a continuous board cut into individual carrier boards with the length L or a multiple of (L).

6. The method according to any one of the preceding claims, **characterised in that** retaining profiles are incorporated on edges (2, 3) of the floor panel (1).

## Revendications

1. Procédé de fabrication d'un panneau de revêtement de sol (1) ayant une longueur (L) et une largeur (B) qui présente une âme (4) et une couche isolante (6) qui est disposée sur une face de marche (5) dudit panneau de revêtement de sol (1), ladite couche isolante (6) étant amenée à une machine à imprimer qui produit sur une face supérieure (6b) de ladite couche isolante (6), qui est tournée vers la face de marche, une image imprimée (12) répétitive ayant une longueur d'image imprimée qui correspond à la longueur L du panneau de revêtement de sol ou à un multiple de L, **caractérisé par le fait que** ladite couche isolante (6) est fabriquée en tant que bande continue ayant une largeur B_{D} qui correspond à un multiple de la largeur B du panneau de revêtement de sol (1), que ladite bande continue est tronçonnée d'abord en feuilles individuelles de couche isolante (12) ayant une longueur L ou un multiple de L et que la feuille de couche isolante (12) est fixée sur la plaque support afin de produire un panneau de stratifié qui, après la fixation, est découpé en panneaux individuels de revêtement de sol (1).

2. Procédé selon la revendication 1, **caractérisé par le fait que** ladite couche isolante (6) comprend une matière plastique en mousse, de préférence une mousse en PVC (6a).

3. Procédé selon la revendication 1 ou 2, **caractérisé par le fait que** ladite image imprimée (12) répétitive est produite par un cylindre d'impression avec un déroulement de longueur qui correspond à la longueur L du panneau de revêtement de sol (1) à un multiple de L.

4. Procédé selon l'une quelconque des revendications précédentes, **caractérisé par le fait que** ladite bande continue présente des repères de coupe ou de tronçonnage à une distance de L ou d'un multiple de L.

5. Procédé selon l'une quelconque des revendications précédentes, **caractérisé par le fait que** ladite âme (4) est obtenue à partir d'une plaque continue qui est tronçonnée en plaques support individuelles de la longueur L ou d'un multiple de (L).

6. Procédé selon l'une quelconque des revendications précédentes, **caractérisé par le fait que** des profilés de maintien sont réalisés sur des bords (2, 3) du panneau de revêtement de sol (1).
